Europäisches Patentamt

European Patent Office

Office européen des brevets

(19)

(11) Veröffentlichungsnummer: **0 001 257**
**B1**

# EUROPÄISCHE PATENTSCHRIFT

(12)

(21) Anmeldenummer: **78100880.0**

(22) Anmeldetag: **13.09.78**

(51) Int. Cl.³: **B 65 G 17/08,** F 23 H 11/04,
C 22 B 1/20

(54) Wanderrost mit endlos umlaufender Rostkette, deren Rostglieder je eine Rostplatte aufweisen.

(30) Priorität: **19.09.77 DE 2742100**

(43) Veröffentlichungstag der Anmeldung:
**04.04.79 Patentblatt 79/07**

(45) Bekanntmachung des Hinweises auf die Patenterteilung:
**09.01.80 Patentblatt 80/01**

(84) Benannte Vertragsstaaten: **CH FR GB**

(56) Entgegenhaltungen:
**DE − A − 1 758 067**
**DE − B − 2 109 948**
**DE − C − 948 048**
**US − A − 2 804 834**
**US − A − 3 962 977**

(73) Patentinhaber: **Polysius AG,**
**Graf-Galen-Strasse 17,**
**D−4720 Beckum (DE)**

(72) Erfinder: **Körting, Reinhard,**
**Amtmann-Brüning-Strasse 23A,**
**D−4735 Enniger (DE)**

(74) Vertreter: **Tetzner, Volkmar, Dr.-Ing. Dr.jur.,**
**Van-Gogh-Strasse 3,**
**D−8000 München 71 (DE)**

EP 0 001 257 B1

Wanderrost mit endlos umlaufender Rostkette, deren Rostglieder je eine Rostplatte aufweisen

Die Erfindung betrifft einen Wanderrost mit einer endlos umlaufenden Rostkette, in der aufeinanderfolgende Rostglieder durch Gelenkachsen verbunden sind und je wenigstens eine Rostplatte enthalten, deren vorderes Ende kreisbogenförmig um die Gelenkachse gekrümmt ist und deren hinteres Ende sich gleitend auf dem vorderen Ende der folgenden Rostplatte abstützt, wobei ein auf der Unterseite der Rostplatte vorgesehener, sich nach hinten erstreckender Haltesteg die zugehörige Gelenkachse mit Spiel untergreift.

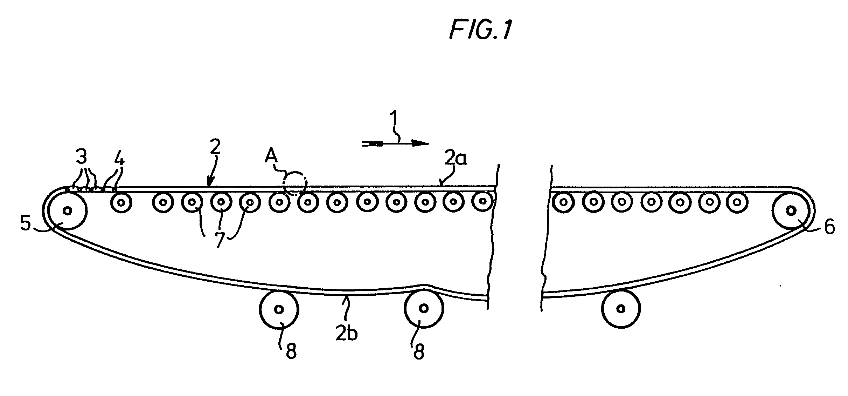

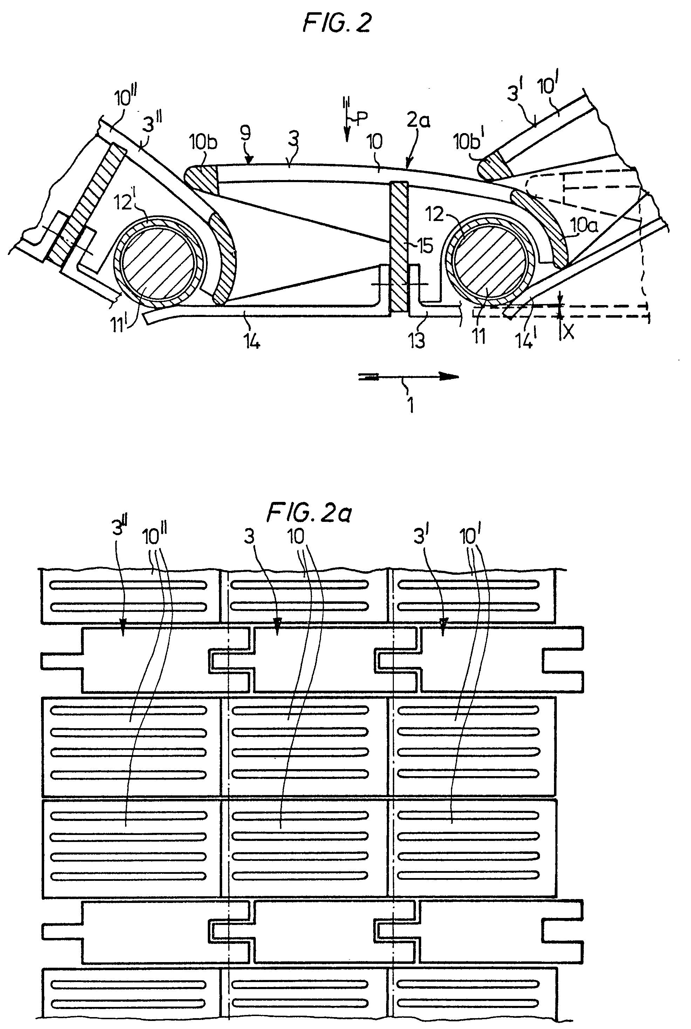

Ein bekannter Wanderrost der vorstehend genannten Art ist in den Fig. 1, 2 und 2a der Zeichnung veranschaulicht.

Der bekannte Wanderrost gemäß den Fig. 1, 2 und 2a enthält eine in Richtung des Pfeiles 1 endlos umlaufende geschlossene Rostkette 2, deren Rostglieder 3 über Gelenkachsen 4 miteinander verbunden sind. Die Rostkette 2 wird über Umlenkelemente 5, 6 umgelenkt und in ihrem oberen Trum 2a von einer Vielzahl eng nebeneinander angeordneter Tragrollen 7 abgestützt. Das untere Trum 2b der Rostkette wird durch eine kleinere Zahl von in entsprechend größeren Abständen angeordneten Tragrollen 8 abgestützt.

Der in Fig. 1 mit A angedeutete Ausschnitt ist in den Fig. 2 und 2a näher veranschaulicht. Er zeigt drei in Kettenlängsrichtung aufeinanderfolgende Rostglieder (3, 3', 3'', die sich im Bereich zwischen zwei benachbarten Tragrollen 7 befinden. Alle Rostglieder sind gleichartig ausgeführt, so daß im folgenden nur das Rostglied 3 näher erläutert wird.

Die Rostplatte 10 enthält eine Guttragfläche 9, die nur flach gewölbt ist. Das vordere Plattenende 10a ist kreisbogenförmig um die Gelenkachse 11 gekrümmt, wobei sich dieses kreisbogenförmig gekrümmte Plattenende 10a glatt und ohne Stufe an den leicht gewölbten Hauptteil der Platte anschließt. Das hintere Ende 10b der Rostplatte 10 stützt sich auf der Rostplatte 10'' des folgenden Rostgliedes 3'' ab.

Auf den Gelenkachsen 11, 11' sind Distanzrohre 12, 12' vorgesehen. Zur Halterung der Rostplatte an den Gelenkachsen sind auf der Unterseite der Rostplatte 10 an einem Quersteg 15 vordere und hintere Haltewinkel 13 bzw. 14 angeschraubt. Der vordere Haltewinkel 13 erstreckt sich nach vorn bis unter das Distanzrohr 12 der vorderen Gelenkachse 11, während der hintere Haltewinkel 14 nach hinten unter das Distanzrohr 12' der folgenden Gelenkachse 11' reicht. Zwischen den Haltewinkeln 13, 14 und den zugehörigen Distanzrohren 12, 12' soll ein kleines Spiel x vorhanden sein.

Durch das auf der Rostkette lastende Gut und das Eigengewicht der Kette ergibt sich eine Belastung in Richtung des Pfeiles P, die die Rostkette 2 in ihrem oberen Trum 2a zwischen je zwei aufeinanderfolgenden Tragrollen 7 nach unten durchzuknicken sucht (wie dies durch die Relativstellung der Rostglieder 3, 3', 3'' in Fig. 2 angedeutet ist). Betrachtet man nun die sich bei einer solchen Durchknickung ergebende Lageveränderung des hinteren Endes 10b' der Rostplatte 10' gegenüber der Rostplatte 10, so erkennt man, daß sich bei dieser Durchknickbewegung der Abstand des Plattenendes 10b' von der Gelenkachse 11 vergrößert. Dies hat zur Folge, daß der hinterste Teil des Haltewinkels 14 nach unten abgebogen wird, wie dies Fig. 2 zeigt. Kommen dann aufeinanderfolgende Rostglieder wieder in eine geradlinige, nicht abgeknickte Lage (etwa im Bereich, in der die Gelenkachse 11 über eine Tragrolle 7 läuft), so ergibt sich durch die unerwünschte Abbiegung des hinteren Endes des Haltewinkels 14 bzw. 14' ein unerwünscht großes Spiel x. Im unteren Trum der Rostkette können – bedingt durch die großen Abstände der Tragrollen 8 – diese Verformungen der hinteren Haltewinkel 14 so groß werden, daß sie unter Umständen zum Bruch führen.

Der Erfindung liegt die Aufgabe zugrunde, unter Vermeidung dieser Mängel einen Wanderrost der eingangs genannten Art so auszubilden, daß Durchknickungen der Rostkette keine Verformung der hinteren Haltewinkel verursachen können. Diese Aufgabe wird erfindungsgemäß dadurch gelöst, daß das kreisbogenförmig gekrümmte vordere Plattenende über eine bei horizontaler Lage der Rostplatte etwa vertikal durch die Gelenkachse verlaufende Bezugsebene hinaus nach hinten bis zu einer sich quer über die Rostplatte und parallel zur Gelenkachse erstreckenden Abkröpfung verlängert ist.

Die erfindungsgemäße Verlängerung des kreisbogenförmig gekrümmten vorderen Plattenendes (nach hinten über die erwähnte Bezugsebene hinaus) gewährleistet, daß sich auch bei Durchknickungen der Rostkette der Abstand zwischen dem hinteren Rostplattenende und der benachbarten Gelenkachse nicht vergrößert. Damit bleibt auch der Abstand zwischen dem hinteren Haltewinkel und dieser Gelenkachse erhalten, und es wird die oben erläuterte unerwünschte Verformung des hinteren Haltewinkels vermieden.

Die erfindungsgemäß in der Rostplatte vorgesehene Abkröpfung bildet beim Durchknicken der Rostkette einen Anschlag für das hintere Ende der vorausgehenden Rostplatte und begrenzt damit die Durchknickbewegung auf ein Maß, bei dem der hintere Haltewinkel nicht unzulässig verformt wird.

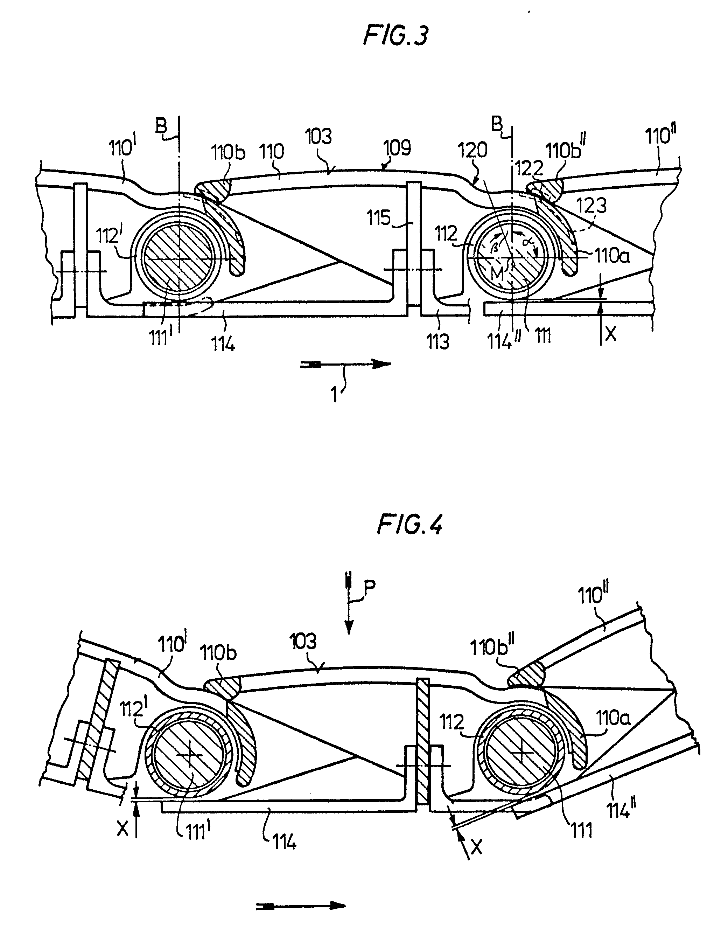

Ein Ausführungsbeispiel der Erfindung ist in den Fig. 3 bis 5 der Zeichnung veranschaulicht.

Jedes Rostglied der Rostkette 103 des in den Fig. 3 bis 5 veranschaulichten erfindungsgemäßen Wanderrostes enthält eine Rostplatte 110, deren vorderes Ende 110a kreisbogenförmig um die Gelenkachse 111 gekrümmt ist (die geometrische Mittelachse M der Gelenkachse 111 stellt also gleichzeitig den Krümmungsmittelpunkt des Plattenendes 110a dar). Das kreisbogenförmig gekrümmte vordere Plattenende 110a ist nun über eine Bezugsebene B hinaus nach hinten verlängert. Die Bezugsebene B verläuft bei horizontaler Lage der Rostplatte 110 etwa vertikal durch die geometrische Mittelachse M der Gelenkachse 111. Der vor der Bezugsebene B liegende Abschnitt des kreisbogenförmig gekrümmten Plattenendes 110a erstreckt sich über einen Winkel $\alpha$ von etwa 90° und der über die Bezugsebene B nach hinten verlängerte Abschnitt über einen Winkel $\beta$ von höchstens etwa 30°, vorzugsweise etwa 20°.

Der über die Bezugsebene B nach hinten hinaus verlängerte Abschnitt des kreisbogenförmig gekrümmten vorderen Plattenendes 110a wird durch
eine sich quer über die Rostplatte 110 und parallel zur
Gelenkachse 111 erstreckende Abkröpfung 120 gegenüber dem mittleren Teil der Rostplatte 110 begrenzt. Die Stärke der Abkröpfung 120 entspricht
dabei etwa der Stärke des hinteren Endes 110b der
Rostplatte.

Im übrigen entspricht der Aufbau der Rostkette 103
der bekannten Ausführung gemäß Fig. 2. Die Rostplatte enthält also eine flach gewölbte Guttragfläche
109. Das hintere Ende 110 der Rostplatte gleitet auf
der folgenden Rostplatte 110'. Auf der Unterseite der
Rostplatte 110 ist eine quer zum Rostglied verlaufende Verstärkungsrippe 115 vorgesehen, an der zwei
vordere Haltewinkel 113 und ein hinterer Haltewinkel
114 angeschraubt sind. Diese Haltewinkel untergreifen mit geringem Spiel x die Distanzrohre 112 bzw.
112' der Gelenkachsen 111, 111'.

Bei einer Durchknickbewegung, wie sie in Fig. 4
veranschaulicht ist, können sich die hinteren Enden
(z.B. 110b") der Rostplatten (z.B. 110") so weit auf
den zugehörigen, kreisbogenförmig gekrümmten vorderen Enden (z.B. 110a) der folgenden Rostplatte
(z.B. 110) verschieben, daß der Abstand des zugehörigen hinteren Haltewinkels (z.B. 114") von der zugehörigen Gelenkachse (z.B. 111) nicht geändert und
auf diese Weise eine unerwünschte Verformung dieses Haltewinkels vermieden wird.

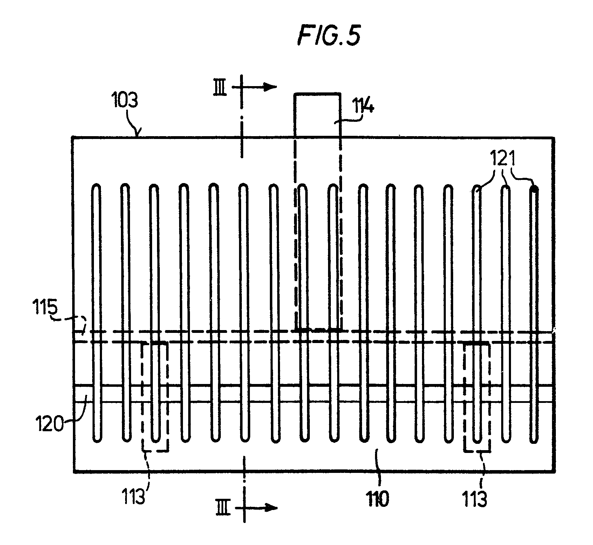

Fig. 5 zeigt eine Rostplatte 110 in Aufsicht. Neben
der Anordnung der vorderen und hinteren Haltewinkel
113 bzw. 114 sind auch noch die Luftdurchtrittsschlitze 121 zu erkennen, die parallel zueinander liegen
und in Kettenlängsrichtung verlaufen.

Wie die Fig. 2a und 5 erkennen lassen, kann jedes
Rostglied je nach Bedarf eine Rostplatte (Fig. 5) oder
mehrere gleichartige Rostplatten (Fig. 2a) enthalten.

Die miteinander in Gleitberührung stehenden Flächen der vorderen und hinteren Rostplattenenden
können – wie dies in Fig. 3 gestrichelt angedeutet ist –
mit Verschleißeinlagen 122, 123 aus Material mit
niedrigem Reibungskoeffizienten versehen sein.

**Patentansprüche**

1. Wanderrost mit einer endlos umlaufenden Rostkette, in der aufeinanderfolgende Rostglieder durch
Gelenkachsen miteinander verbunden sind und je
wenigstens eine Rostplatte enthalten, die mit ihrem
vorderen, kreisbogenförmig gekrümmten Ende auf
der Gelenkachse aufliegt und deren hinteres Ende
sich gleitend auf dem vorderen Ende der folgenden
Rostplatte abstützt, wobei ein auf der Unterseite der
Rostplatte vorgesehener, sich nach hinten erstrekkender Haltesteg die zugehörige Gelenkachse mit
Spiel untergreift, dadurch gekennzeichnet, daß das
kreisbogenförmig gekrümmte vordere Plattenende
(z.B. 110a) über eine bei horizontaler Lage der
Rostplatte (z.B. 110) etwa vertikal durch die Gelenkachse (z.B. 111) verlaufende Bezugsebene (B) hinaus nach hinten bis zu einer sich quer über die
Rostplatte (z.B. 110) und parallel zur Gelenkachse
(z.B. 111) erstreckenden Abkröpfung (120) verlängert
ist.

2. Wanderrost nach Anspruch 1, dadurch gekennzeichnet, daß sich der vor der Bezugsebene (B)
liegende Abschnitt des kreisbogenförmig gekrümmten Plattenendes (z.B. 110a) über einen Winkel (β)
von etwa 90° und der über die Bezugsebene (B) nach
hinten verlängerte Abschnitt über einen Winkel (β)
von höchstens etwa 30°, vorzugsweise etwa 20°,
erstreckt.

3. Wanderrost nach Anspruch 1, dadurch gekennzeichnet, daß die Stärke der Abkröpfung (120) etwa
der Stärke des hinteren Endes (z.B. 110b) der Rostplatte (z.B. 110) entspricht.

4. Wanderrost nach Anspruch 1, dadurch gekennzeichnet, daß die Gleitberührungsflächen des vorderen und/oder hinteren Rostplattenendes (z.B. 110a,
110b) Einlagen, (122 bzw. 123) aus Material mit
niedrigem Reibungskoeffizienten aufweisen.

**Claims**

1. Travelling grate comprising an endlessly circulating grate chain in which successive grate members
are connected together by pivot pins and each
comprise at least one grate plate which with its front
arcuately curved end bears on the pivot pin and the
rear end of which bears slidingly on the front end of
the following grate plate, a holding web provided on
the lower side of the grate plate and extending
rearwardly engaging beneath the associated pivot pin
with clearance, characterized in, that the arcuately
curved front plate end, (e.g. 110a) is extended
beyond a reference plane (B) running in the horizontal
position of the grate plate (e.g. 110) substantially
vertically through the pivot pin (e.g. 111) rearwardly
up to a bend (120) extending transversely over the
grate plate (e.g. 110) and parallel to the pivot pin (e.g.
111).

2. Travelling grate according to claim 1, characterized in that the portion of the arcuately curved plate
end (e.g. 110a) lying in front of the reference plane (B)
extends over an angle (β) of about 90° and the portion
extended beyond the reference plane (B) rearwardly
extending over an angle (β) of at the most about 30°,
preferably about 20°.

3. Travelling grate according to claim 1, characterized in that the thickness of the bend (120) corresponds substantially to the thickness of the rear end
(e.g. 110b) of the grate plate (e.g. 110).

4. Travelling grate according to claim 1, characterized in that the slide contact faces of the front and/or
rear grate plate end (e.g. 110a, 110b) comprise
inserts (122, 123) of material of low coefficient of
friction.

**Revendication:**

1. Grille mobile avec une chaîne tournant à l'infini
dans laquelle des maillons successifs sont reliés par
des axes articulés et comportent au moins une plaque
grillées chacun dont le bout avant courbé en forme
d'arc de cercle repose sur l'axe articulé et dont le bout
arrière s'appuie en coulissant sur le bout avant de la
plaque grillée suivante, un étançon de retenue prévu à la partie inférieure de la plaque grillée et s'étendant vers l'arrière encastre l'axe articulé correspondant avec jeu, caractérisée par le fait que le bout de plaque avant (par exemple 110a) courbé en forme d'arc de cercle est prolongé par l'intermédiaire d'un plan de référence (B) évoluant presque verticalement à travers l'axe articulé (p.e. 111) en cas de position horizontale de la plaque grillée (p.e. 110a) vers l'arrière jusqu'à un coudage (120) s'étendant à travers la plaque grillée (p.e. 110) et parallèle à l'axe articulé (p.e. 111).

2. Grille mobile selon la revendication 1, caractérisée par le fait que la section se trouvant avant le plan de référence (B) du bout de plaque (p.e. 110a) courbé en forme d'arc de cercle s'étend par un angle (β) d'environ 90° et la section prolongée vers l'arrière au moyen du plan de référence (B) par un angle (β) d'au plus 30°, de préférence environ 20°.

3. Grille mobile selon la revendication 1, caractérisée par le fait que l'épaisseur de coudage (120) correspond environ à l'épaisseur du bout arrière (p.e. 110b) de la plaque grillée (p.e. 110).

4. Grille mobile selon la revendication 1, caractérisée par le fait que les surfaces de contact de glissement du bout de plaque grillée avant et/ou arrière (p.e. 110a, 110b) présentent des revêtements (122 et 123) en matérial à coefficient de frottement réduit.

FIG.1

## FIG. 2

## FIG. 2a

## FIG.3

## FIG.4

## FIG.5